# EUROPÄISCHE PATENTSCHRIFT

(11) **EP 3 856 573 B1**
(45) Veröffentlichungstag und Bekanntmachung des Hinweises auf die Patenterteilung: **12.10.2022**
(21) Anmeldenummer: 19769052.2
(22) Anmeldetag: 30.08.2019
(51) Int. Cl.: B60R 13/02

(54) **VERKLEIDUNGSELEMENT FÜR EINE SÄULE EINER KAROSSERIE EINES KRAFTFAHRZEUGS**
TRIM ELEMENT FOR A VEHICLE BODY PANEL FOR A PILLAR IN A BODY OF A MOTOR VEHICLE
ÉLÉMENT D'HABILLAGE POUR UNE COLONNE DE LA CAROSSERIE D'UN VÉHICULE AUTOMOBILE

(30) Priorität: 26.09.2018 DE 102018216429
(43) Veröffentlichungstag der Anmeldung: 04.08.2021
(73) Patentinhaber: AUDI AG, 85045 Ingolstadt (DE)
(72) Erfinder: BAUER, Martin, 85049 Ingolstadt (DE)
(86) Internationale Anmeldenummer: PCT/EP2019/073159
(87) Internationale Veröffentlichungsnummer: WO 2020/064264

(56) Entgegenhaltungen:
- DE-U1- 29 822 768
- US-A1- 2005 052 001
- US-A1- 2012 244 770

## Beschreibung

Die Erfindung betrifft ein Verkleidungselement für eine Säule einer Karosserie eines Kraftfahrzeugs, insbesondere für eine A-Säule, und ein Kraftfahrzeug mit einem solchen Verkleidungselement.

Bei derartigen Verkleidungselementen ist es bekannt, ein Textilelement an der Außenseite anzubringen und einen Randabschnitt auf die Innenseite umzuschlagen und mit der Innenseite zu verbinden. Üblicherweise ist der Randabschnitt minimal dimensioniert, so dass der umgeschlagenen Randabschnitt lediglich eine geringe Fläche der Innenseite bedeckt. Der Randabschnitt bildet dabei nur eine Art Saum, der mit der Innenseite des Verkleidungselements verschweißt oder verklebt ist.

Ein solches Verkleidungselement ist aus der US 2005/052001 A1 bekannt. Es wird hierzu ferner beispielhaft auf die DE 43 089 25 A1, die US 2012/244770A und die DE 298 22 768 U1 verwiesen.

Derartige Verkleidungselemente decken in einigen Kraftfahrzeugtypen auch einen dahinter aufgenommenen aufblasbaren Luftsack (Airbag) ab, insbesondere einen Kopfairbag, der üblicherweise in den Vordersäulen (A-Säulen) eines Kraftfahrzeugs vorgesehen ist. Wird im Kollisionsfall der Luftsack aufgeblasen, besteht das Risiko, dass sich das Verkleidungselement nicht entlang eines vorgesehenen Biegeabschnitts verformt, sondern an anderen Stellen unerwünschte Verformungen auftreten. Hierdurch kann das ungehinderte und geplante Entfalten des Luftsacks beeinträchtigt werden.

Die der Erfindung zu Grunde liegende Aufgabe wird darin gesehen, ein Verkleidungselement anzugeben, bei dem das Risiko von unerwünschten Verformungen beim Aufblasen des Luftsacks vermindert oder sogar ausgeschlossen ist.

Diese Aufgabe wird gelöst durch ein Verkleidungselement mit den Merkmalen des Patentanspruchs 1 und durch ein Kraftfahrzeug mit den Merkmalen des Patentanspruchs 9. Vorteilhafte Ausgestaltungen mit zweckmäßigen Weiterbildungen sind in den abhängigen Patentansprüchen angegeben.

Vorgeschlagen wird also ein Verkleidungselement für eine Säule einer Karosserie eines Kraftfahrzeugs, insbesondere für eine A-Säule, mit einem Grundkörper;
einer Außenseite des Grundkörpers, die in einem montierten Zustand des Verkleidungselements an der Säule einem Fahrzeuginnenraum zugewandt ist;
einer Innenseite des Grundkörpers, die in einem montierten Zustand des Verkleidungselements an der Säule der Karosserie zugewandt ist;
einem die Außenseite abdeckenden Textilelement mit mehreren auf die Innenseite umgeschlagenen Randabschnitten;
einem sich im Wesentlichen entlang einer Längsrichtung des Verkleidungselements erstreckenden Biegeabschnitt, der im Grundkörper ausgebildet ist; und
einem entlang des Biegeabschnitts verlaufenden Schwenkabschnitt des Grundkörpers, der mit dem Biegeabschnitt verbunden ist und unter Krafteinwirkung um den Biegeabschnitt schwenkbar ist, wobei das Verkleidungselement dazu eingerichtet ist, einen aufblasbaren Luftsack in seinem nicht aufgeblasenen Zustand aufzunehmen. Dabei ist vorgesehen, dass wenigstens ein Randabschnitt des Textilelements auf der Innenseite über dem Biegeabschnitt angeordnet ist und an mehreren Fügestellen mit der Innenseite materialschlüssig verbunden ist, wobei die Fügestellen entlang des Biegeabschnitts angeordnet sind.

Der an der Innenseite des Grundkörpers des Verkleidungselements über den Biegeabschnitt angeordnete und mittels der Fügestellen befestigte umgeschlagene Randabschnitt des Textilelements ermöglicht die Aufnahme von Kräften, die auf das Verkleidungselement wirken. Insbesondere kann der Randabschnitt auf das Verkleidungselement bzw. den Grundkörper wirkende Zugkräfte aufnehmen und einem unerwünschten Verformen des Grundkörpers entgegenwirken. Durch den umgeschlagenen Randabschnitt kann also sichergestellt werden, dass im Falle des Aufblasens des vom Verkleidungselement abgedeckten Luftsacks, ein geplantes Aufschwenken des Schwenkabschnitts des Grundkörpers unter Verformung des Biegeabschnitts erfolgt. Dabei bildet der textile Randabschnitt eine Verstärkung des Grundkörpers und ermöglicht, dass der Schwenkabschnitt um den Biegeabschnitt geschwenkt wird, ohne dass der Biegeabschnitt unter der hohen Krafteinwirkung des sich explosionsartig aufblasenden Luftsacks in unerwünschter Weise verformt wird.

Der Biegeabschnitt wird auch als sogenannte Splitlinie bezeichnet. Im Grundkörper wird der Biegeabschnitt insbesondere durch eine linienartige Materialverdünnung gebildet. Anders ausgedrückt kann der Biegeabschnitt auch als elastisches verformbares Materialscharnier bezeichnet werden. Der Grundkörper des Verkleidungselements kann aus einem Kunststoff hergestellt sein. Unter dem Textilelement wird ein Element verstanden, das aus natürlichen oder künstlichen Fasern oder/und Fäden gebildet ist, beispielsweise naturfaserverstärkten Kunststoffen oder dergleichen.

Die Fügestellen können auf beiden Seiten des Biegeabschnitts angeordnet sein. Hierdurch wird sichergestellt, dass wirkende Kräfte beidseitig des Biegeabschnitts durch den textilen Randabschnitt aufgenommen werden können.

Die Fügestellen auf der einen Seite des Biegeabschnitts können versetzt zu den Fügestellen auf der anderen Seite des Biegeabschnitts angeordnet sein. Anders ausgedrückt können die Fügestellen ausgehend von einer ersten Fügestelle auf der einen Seite des Biegeabschnitts entlang einer gedachten Zickzacklinie angeordnet sind, wobei jeder Abschnitt der Zickzacklinie den Biegeabschnitt schneidet und zwei Fügestellen auf unterschiedlichen Seiten des Biegeabschnitts verbindet. Eine derartige versetzte Anordnung von Fügestellen beidseitig des Biegeabschnitts ermöglicht eine verbesserte Verteilung bzw. Einleitung von wirkenden Kräften.

Die Fügestellen können ferner mit einem Abstand zum Biegeabschnitt angeordnet sein. Dabei kann der Abstand einer Fügestelle zu dem Biegeabschnitt gleich groß oder größer sein als eine zur Längsrichtung des Biegeabschnitts im Wesentlichen orthogonal gemessene Breite der Fügestelle. Der Abstand zwischen dem Biegeabschnitt und einer Fügestelle beträgt beispielsweise etwa 3 bis 15 Millimeter, bevorzugt etwa 5 bis 10 Millimeter. Durch das Vorsehen eines Abstandes der Fügestellen von dem Biegeabschnitt kann die im Falle des Schwenken des Klappabschnitts wirkende Zugkraft besser durch den Randabschnitt aufgenommen werden.

Die Fügestellen können Ultraschallschweißstellen oder Klebestellen sein. Neben dem Ultraschallschweißen können auch andere Schweißverfahren eingesetzt werden, durch die eine materialschlüssige Verbindung zwischen dem textilen Randabschnitt und dem Grundkörper herstellbar sind.

Der umgeschlagene Randabschnitt kann in dem Bereich der Innenseite über dem Biegeabschnitt angeordnet sein, hinter dem im montierten Zustand der Luftsack angeordnet ist. Entsprechend ist es nicht zwingend erforderlich, wenn auch denkbar, dass der Randabschnitt über die gesamte Länge des Grundkörpers so auf die Innenseite umgeschlagen ist, dass er über dem Biegeabschnitt angeordnet ist. Vielmehr kann der Randabschnitt nur in einem bezogen auf den montierten Zustand am Kraftfahrzeug oberen Bereich, insbesondere in einer oberen Hälfte des Verkleidungselements über dem Biegeabschnitt angeordnet sein.

Ein oberer oder unterer umgeschlagener Randabschnitt des Textilelements kann auf einem seitlichen umgeschlagenen Randabschnitt angeordnet sein. Hierdurch wird sichergestellt, dass der Bereich des Verkleidungselements, auf den der Luftsack beim Aufblasen zuerst trifft, durch zwei übereinander liegende Randabschnitte trifft, so dass ein unerwünschtes Verformen des Grundkörpers an dieser Stelle wirkungsvoll verhindert werden kann.

Ferner wird noch ein Kraftfahrzeug vorgeschlagen mit einer Karosserie, wobei die Karosserie in einem oberen Bereich mehrere Säulen umfasst, insbesondere zwei vordere A-Säulen; mit wenigstens einem oben beschriebenen Verkleidungselement, wobei das Verkleidungselement an einer der Säulen angebracht ist; und mit einem aufblasbaren Luftsack, der bezogen auf einen Fahrzeuginnenraum hinter dem Verkleidungselement aufgenommen ist. Dabei kann das Verkleidungselement insbesondere ein Verkleidungselement für die beiden A-Säulen sein, wobei hinter dem Verkleidungselement ein jeweiliger (nicht aufgeblasener) Kopfairbag für die Fahrerseite bzw. die Beifahrerseite aufgenommen ist.

Weitere Vorteile, Merkmale und Einzelheiten der Erfindung ergeben sich aus den Patentansprüchen, der nachfolgenden Beschreibung bevorzugter Ausführungsformen sowie anhand der Zeichnungen. Dabei zeigt:
- Fig. 1: eine vereinfachte und schematische Perspektivdarstellung eines Verkleidungselements einer A-Säule eines Fahrzeugs;
- Fig. 2: eine Schnittdarstellung entsprechend der Schnittlinie II-II der Fig. 1;
- Fig. 3: eine Schnittdarstellung entsprechend der Schnittlinie III-III der Fig. 1;
- Fig. 4: eine Schnittdarstellung entsprechend der Schnittlinie IV-IV der Fig. 1;
- Fig. 5: eine Schnittdarstellung entsprechend der Schnittlinie V-V der Fig. 1;
- Fig. 6: eine schematische und stark vereinfachte Illustration eines Ausschnitts des Verkleidungselements mit

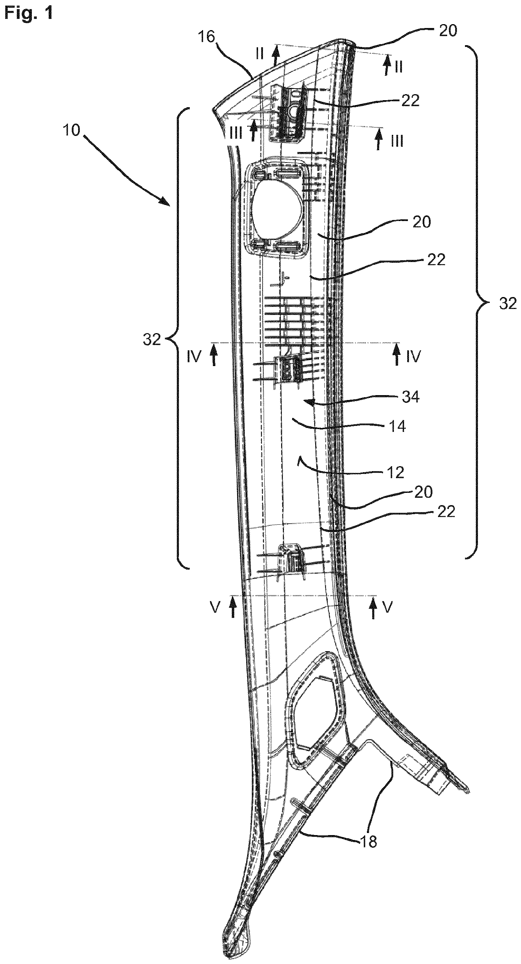

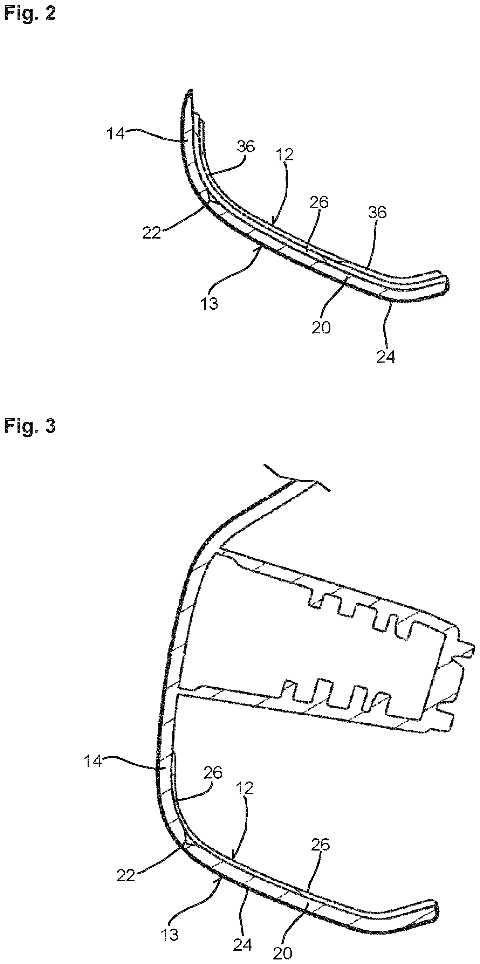

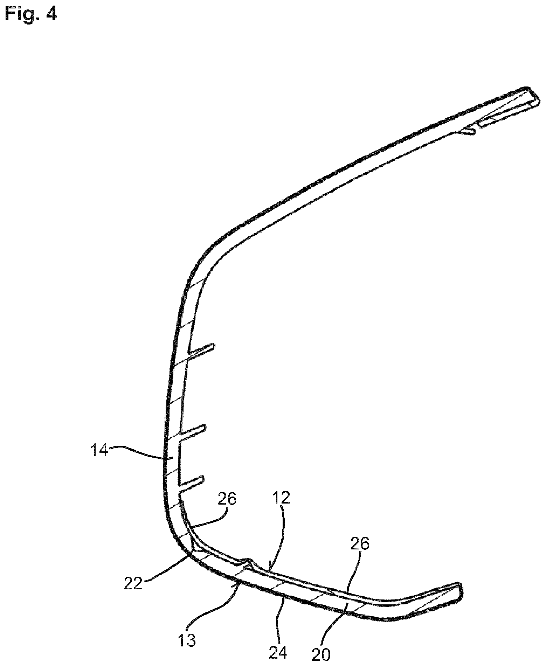

Nachfolgend wird ein Verkleidungselement 10 unter gleichzeitiger Bezugnahme auf die Fig. 1 und die verschiedenen Schnitte der Fig. 2 bis 5 beschrieben.

In Fig. 1 ist ein Verkleidungselement 10 für eine A-Säule einer Karosserie eines Kraftfahrzeugs in einer vereinfachten und schematischen Perspektivdarstellung gezeigt. Das Verkleidungselement ist so dargestellt, dass man auf eine Innenseite 12 eines Grundkörpers 14 blickt. In einem montierten Zustand des Verkleidungselements 10 an einer A-Säule eines Fahrzeugs ist die Innenseite 12 der A-Säule (Karosserie) zugewandt. Aus den Schnittdarstellungen der Fig. 2 sind der Grundkörper 14 und die Innenseite 12 ebenfalls ersichtlich. Ferner ist aus den Schnittdarstellungen der Fig. 2 bis 5 die Außenseite 13 des Verkleidungselements 10 ersichtlich. Die Außenseite 13 ist in einem montierten Zustand des Verkleidungselements an einer A-Säule dem Fahrzeuginnenraum zugewandt. Durch die in den Fig. 2 bis 5 an der Außenseite 13 gezeichnete dickere schwarze Linie wird die zum Innenraum des Fahrzeugs gerichtete Stoff- bzw- Textilseite illustriert.

Das hier dargestellte Verkleidungselement 10 ist für die A-Säule auf der linken Seite eines Fahrzeugs ausgelegt. Bezogen auf seinen montierten Zustand in einem Fahrzeug weist das Verkleidungselement 10 ein oberes Ende 16 und ein unteres Ende 18 auf. Das Verkleidungselement 10 deckt in seinem an der A-Säule montierten Zustand einen zusammengefalteten, aufblasbaren Luftsack (nicht dargestellt) ab. Im Falle einer Kollision, wird der Luftsack mit Gas gefüllt (aufgeblasen) und tritt aus seiner Unterbringung hinter dem Verkleidungselement 10 in Richtung des Innenraums des Fahrzeugs heraus. Hierbei wird das Verkleidungselement 10 durch den sich aufblasenden Luftsack verdrängt bzw. verformt.

Das Verkleidungselement 10 weist an seinem Grundkörper 14 einen Schwenkabschnitt 20 auf. Entlang des Schwenkabschnitts 20 verläuft ein Biegeabschnitt 22, der eine Art Scharnier für den Schwenkabschnitt 20 bildet. Der Biegeabschnitt 22 wird auch als sogenannte Splitlinie bezeichnet. Im Grundkörper 14 ist der Biegeabschnitt 22 insbesondere durch eine linienartige Materialverdünnung gebildet. Anders ausgedrückt kann der Biegeabschnitt 22 auch als elastisches verformbares Materialscharnier bezeichnet werden. Aus den Schnitten der Fig. 2 bis 5 ist ersichtlich, dass der Biegeabschnitt als Kerbe zwischen dem Grundabschnitt 14 und dem Schwenkabschntt 20 ausgebildet ist.

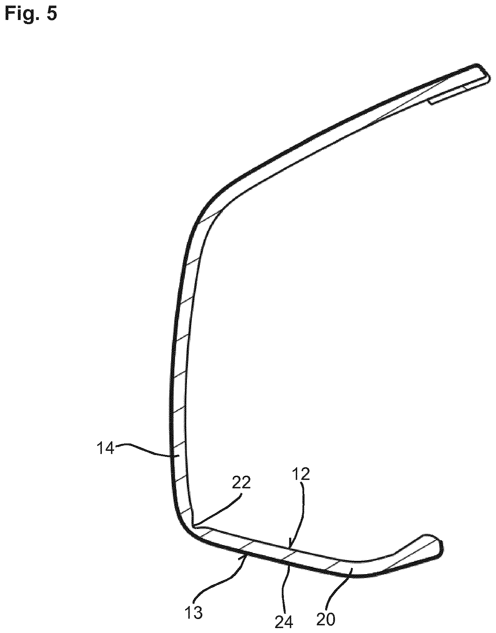

Die Außenseite 13 des Verkleidungselements 10 wird üblicherweise von einem Textilelement 24 gebildet, das in den Schnittdarstellungen der Fig. 2 bis 5 einfach als dickere schwarze Linie illustriert ist. Das Textilelement 24 weist dabei mehrere Randabschnitte 26 auf, die auf die Innenseite 12 des Grundkörpers 14 umgeschlagen werden, was in den Schnittdarstellungen der Fig. 2 bis 4 gezeigt ist. Die Fig. 5 zeigt einen Schnitt durch das Verkleidungselement 10 in einem Bereich, der keinen Airbag mehr abdeckt. Da in diesem Bereich beim Aufblasen des Airbags weniger große Kräfte wirken, ist der Randabschnitt 26 bzw. Stoffumbug kleiner dimensioniert bzw. nicht erforderlich.

Bei dem hier vorgestellten Verkleidungselement 10 ist derjenige Randabschnitt 26 des Textilelements 24, der im Bereich des Schwenkabschnitts 20 von der Außenseite 13 auf die Innenseite 12 umgeschlagen ist, spezifisch ausgebildet. Insbesondere ist der Randabschnitt 26 so dimensioniert, dass er sich auf der Innenseite 12 über den Biegeabschnitt 22 hinaus erstreckt. In anderen Worten deckt der umgeschlagene Randabschnitt 26, der auch als Stoffumbug bezeichnet werden kann, die Innenseite des Schwenkabschnitts 20 und den Biegeabschnitt 22 ab. Ferner deckt der umgeschlagene Randabschnitt 26 auch einen Teil des Grundkörpers 14 ab, der entlang des Biegeabschnitts 22 verläuft, aber nicht zum Schwenkabschnitt 20 gehört.

Der Randabschnitt 26 ist entlang des Biegeabschnitts 22 und beidseitig des Biegeabschnitts 22 mit dem Grundkörper 14 bzw. dem Schwenkabschnitt 20 materialschlüssig oder stoffschlüssig verbunden. Insbesondere ist der Randabschnitt 26 an mehreren Positionen bzw. Fügestellen 30 entlang des Biegeabschnitts 22 und auf beiden Seiten des Biegeabschnitts 22 mit dem Grundkörper 14 bzw. dem Schwenkabschnitt verschweißt, insbesondere ultraschallverschweißt, oder verklebt.

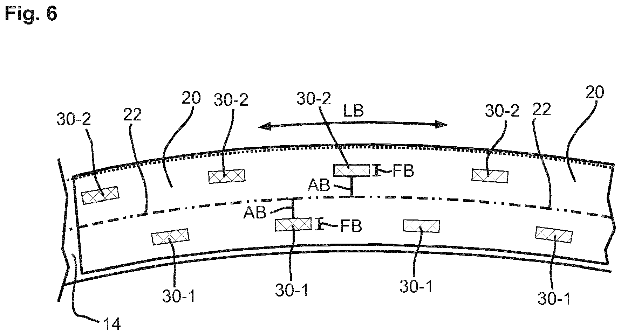

Die beispielhafte Anordnung von Fügestellen 30 entlang des Biegeabschnitts 22 ist vereinfacht und schematisch in Fig. 6 dargestellt. Die Fügestellen 30-1 auf der einen Seite des Biegeabschnitts 22 können dabei versetzt zu den Fügestellen 30-2 auf der anderen Seite des Biegeabschnitts 22 angeordnet sein. Ferner können die Fügestellen 30-1, 30-2 mit einem Abstand AB zum Biegeabschnitt angeordnet sein. Dabei kann der Abstand AB einer Fügestelle 30-1, 30-2 zu dem Biegeabschnitt 22 gleich groß oder größer sein als eine zur Längsrichtung LB des Biegeabschnitts 22 im Wesentlichen orthogonal gemessene Breite FB der Fügestelle 30-1, 30-2.

Der umgeschlagene Randabschnitt 26 ist, wie dies aus der Fig. 1 ersichtlich ist, insbesondere in dem Bereich 32 der Innenseite 12 über dem Biegeabschnitt 22 angeordnet, hinter dem im montierten Zustand der Luftsack angeordnet ist. Im vorliegenden Beispiel erstreckt sich dieser Bereich 32 über etwa zwei Drittel bis drei Viertel der Länge des Verkleidungselements 10. Dieser Bereich 32 kann auch als oberer Abschnitt 34 des Verkleidungselements 10 bezeichnet werden. Der obere Abschnitt 34 erstreckt sich dabei von dem oberen Ende 16 in Richtung des unteren Endes 18, wobei er das untere Ende 18 nicht umfasst.

Bei dem Verkleidungselement 10 können ein oberer oder unterer umgeschlagener Randabschnitt 36 des Textilelements 24 auf einem seitlichen umgeschlagenen Randabschnitt 26 angeordnet sein, wie dies aus der Schnittdarstellung der Fig. 2 ersichtlich ist. Mit anderen Worten liegt der seitliche Randabschnitt 26 im Bereich des oberen Endes 16 bzw. des unteren Endes 18 unterhalb eines oberen bzw. unteren umgeschlagenen Randabschnitts 36.

Der Grundkörper 14 des Verkleidungselements 10 kann aus einem Kunststoff hergestellt sein. Unter dem Textilelement 24 wird ein Element verstanden, das aus natürlichen oder künstlichen Fasern oder/und Fäden gebildet ist, beispielsweise naturfaserverstärkten Kunststoffen oder dergleichen.

Durch die hier vorgestellte Anordnung eines umgeschlagenen Randabschnitts 26 bzw. Stoffumbugs des Textilelements 24 über dem Biegeabschnitt 22 können beim Aufblasen des Luftsacks auf das Verkleidungselement 10 bzw. den Schwenkabschnitt 20 wirkende Kräfte besser aufgenommen und abgeleitet werden. Insbesondere ist die Gefahr des unerwünschten Verformens des Verkleidungselements 10, etwa ausgehend von seinem oberen Ende 16 nach unten, ggf. entlang des Biegeabschnitts 22, verringert, weil der umgeschlagene Randabschnitt 26, der mit dem Grundkörper 14 bzw. dem Schwenkabschnitt 20 auf beiden Seiten des Biegeabschnitts 22 materialschlüssig bzw. stoffschlüssig verbunden ist, entsprechend wirkende Zugkräfte aufnehmen kann. Der Randabschnitt 26 bzw. Stoffumbug wirkt somit als Verstärkung des scharnierartigen Biegeabschnitts 22 und gewährleistet ein korrektes Verschwenken bzw. Bewegen des Schwenkabschnitts 20, ohne dass das Verkleidungselement 10 beim Entfalten des Luftsacks unvorhergesehen beschädigt wird.

## Patentansprüche

1. Verkleidungselement (10) für eine Säule einer Karosserie eines Kraftfahrzeugs, insbesondere für eine A-Säule, mit
einem Grundkörper (14);
einer Außenseite (13) des Grundkörpers (14), die in einem montierten Zustand des Verkleidungselements (10) an der Säule einem Fahrzeuginnenraum zugewandt ist,
einer Innenseite (12) des Grundkörpers (14), die in einem montierten Zustand des Verkleidungselements (10) an der Säule der Karosserie zugewandt ist,
einem die Außenseite (13) abdeckenden Textilelement (24) mit mehreren auf die Innenseite (12) umgeschlagenen Randabschnitten (26, 36), und
einem sich im Wesentlichen entlang einer Längsrichtung des Verkleidungselements (10) erstreckenden Biegeabschnitt (22), der im Grundkörper (14) ausgebildet ist; und
einem entlang des Biegeabschnitts (22) verlaufenden Schwenkabschnitt (20) des Grundkörpers (14), wobei der Schwenkabschnitt (20) mit dem Biegeabschnitt (22) verbunden ist und unter Krafteinwirkung um den Biegeabschnitt (22) schwenkbar ist,
wobei das Verkleidungselement (10) dazu eingerichtet ist, einen aufblasbaren Luftsack in seinem nicht aufgeblasenen Zustand aufzunehmen,
**dadurch gekennzeichnet, dass** wenigstens ein Randabschnitt (26) des Textilelements (24) auf der Innenseite (12) über dem Biegeabschnitt (22) angeordnet ist und an mehreren Fügestellen (30-1, 30-2) mit der Innenseite (12) materialschlüssig verbunden ist, wobei die Fügestellen (30-1, 30-2) entlang des Biegeabschnitts (22) angeordnet sind.

2. Verkleidungselement nach Anspruch 1, **dadurch gekennzeichnet, dass** die Fügestellen (30-1, 30-2) auf beiden Seiten des Biegeabschnitts (22) angeordnet sind.

3. Verkleidungselement nach Anspruch 2, **dadurch gekennzeichnet, dass** die Fügestellen (30-1) auf der einen Seite des Biegeabschnitts (22) versetzt zu den Fügestellen (30-2) auf der anderen Seite des Biegeabschnitts (22) angeordnet sind.

4. Verkleidungselement nach einem der vorhergehenden Ansprüche, **dadurch gekennzeichnet, dass** die Fügestellen (30-1, 30-2) mit einem Abstand (AB) zum Biegeabschnitt (22) angeordnet sind.

5. Verkleidungselement nach Anspruch 4, **dadurch gekennzeichnet, dass** der Abstand (AB) einer Fügestelle (30-1, 30-2) zu dem Biegeabschnitt (22) gleich groß oder größer ist als eine zur Längsrichtung (LB) des Biegeabschnitts (22) im Wesentlichen orthogonal gemessene Breite (FB) der Fügestelle (30-1, 30-2).

6. Verkleidungselement nach einem der vorhergehenden Ansprüche, **dadurch gekennzeichnet, dass** die Fügestellen (30-1, 30-2) Ultraschallschweißstellen oder Klebestellen sind.

7. Verkleidungselement nach einem der vorhergehenden Ansprüche, **dadurch gekennzeichnet, dass** der umgeschlagene Randabschnitt (26) in dem Bereich (32, 34) der Innenseite (12) über dem Biegeabschnitt (22) angeordnet ist, hinter dem im montierten Zustand der Luftsack angeordnet ist.

8. Verkleidungselement nach einem der vorhergehenden Ansprüche, **dadurch gekennzeichnet, dass** ein oberer oder unterer umgeschlagener Randabschnitt (36) des Textilelements (24) auf einem seitlichen umgeschlagenen Randabschnitt (26) angeordnet ist.

9. Kraftfahrzeug mit
einer Karosserie, wobei die Karosserie in einem oberen Bereich mehrere Säulen umfasst, insbesondere zwei vordere A-Säulen;
wenigstens einem Verkleidungselement (10) nach einem der vorhergehenden Ansprüche, wobei das Verkleidungselement (10) an einer der Säulen angebracht ist; und
mit einem aufblasbaren Luftsack, der bezogen auf einen Fahrzeuginnenraum hinter dem Verkleidungselement (10) aufgenommen ist.

## Claims

1. Trim element (10) for a pillar of a body of a motor vehicle, in particular for an A-pillar, having a main body (14);
an exterior (13) of the main body (14), which exterior faces a vehicle interior when the trim element (10) is installed on the pillar,
an interior (12) of the main body (14), which interior faces the body when the trim element (10) is installed on the pillar,
a textile element (24) which covers the exterior (13) and has a plurality of edge portions (26, 36) folded over onto the interior (12), and
a bending portion (22) which extends substantially in a longitudinal direction of the trim element (10) and is formed in the main body (14); and
a pivoting portion (20) of the main body (14), which pivoting portion runs along the bending portion (22), wherein the pivoting portion (20) is connected to the bending portion (22) and is pivotable about the bending portion (22) when force is applied,
wherein the trim element (10) is configured to receive an inflatable air bag in its uninflated state,
**characterised in that** at least one edge portion (26) of the textile element (24) is arranged on the interior (12) above the bending portion (22) and is integrally connected to the interior (12) at a plurality of joints (30-1, 30-2), wherein the joints (30-1, 30-2) are arranged along the bending portion (22).

2. Trim element according to claim 1, **characterised in that** the joints (30-1, 30-2) are arranged on both sides of the bending portion (22).

3. Trim element according to claim 2, **characterised in that** the joints (30-1) on one side of the bending portion (22) are offset from the joints (30-2) on the other side of the bending portion (22).

4. Trim element according to any of the preceding claims, **characterised in that** the joints (30-1, 30-2) are arranged at a distance (AB) from the bending portion (22).

5. Trim element according to claim 4, **characterised in that** the distance (AB) from a joint (30-1, 30-2) to the bending portion (22) is equal to or greater than a width (FB) of the joint (30-1, 30-2) measured substantially orthogonally to the longitudinal direction (LB) of the bending portion (22).

6. Trim element according to any of the preceding claims, **characterised in that** the joints (30-1, 30-2) are ultrasonic welded joints or adhesive joints.

7. Trim element according to any of the preceding claims, **characterised in that** the folded-over edge portion (26) is arranged in the region (32, 34) of the interior (12) above the bending portion (22), behind which the air bag is arranged when the trim element is installed.

8. Trim element according to any of the preceding claims, **characterised in that** an upper or lower folded-over edge portion (36) of the textile element (24) is arranged on a lateral folded-over edge portion (26).

9. Motor vehicle having a body, wherein the body comprises in an upper region a plurality of pillars, in particular two front A-pillars; at least one trim element (10) according to any of the preceding claims, wherein the trim element (10) is attached to one of the pillars; and
having an inflatable air bag received behind the trim element (10) with respect to a vehicle interior.

## Revendications

1. Élément d'habillage (10) pour un montant d'une carrosserie d'un véhicule automobile, en particulier pour un montant A, comprenant un corps de base (14) ;
un côté extérieur (13) du corps de base (14) qui fait face au montant d'un habitable de véhicule lorsque l'élément d'habillage (10) est à l'état monté,
un côté intérieur (12) du corps de base (14) qui fait face au montant de la carrosserie lorsque l'élément d'habillage (10) est à l'état monté,
un élément textile (24) recouvrant le côté extérieur (13) et comprenant plusieurs sections de bord (26, 36) rabattues vers le côté intérieur (12), et
une section de pliage (22) s'étendant essentiellement le long d'une direction longitudinale de l'élément d'habillage (10) et formée dans le corps de base (14) ; et
une section de pivotement (20) du corps de base (14) s'étendant le long de la section de pliage (22), dans lequel la section de pivotement (20) est reliée à la section de pliage (22) et peut pivoter autour de la section de pliage (22) sous l'effet d'une force,
dans lequel l'élément d'habillage (10) est conçu pour accueillir un sac gonflable dans son état non gonflé,
**caractérisé en ce qu'**au moins une section de bord (26) de l'élément textile (24) est agencée sur le côté intérieur (12) au-dessus de la section de pliage (22) et est reliée au côté intérieur (12) par complémentarité de matière au niveau de plusieurs points d'assemblage (30-1, 30-2), dans lequel les points d'assemblage (30-1, 30-2) sont agencés le long de la section de pliage (22).

2. Élément d'habillage selon la revendication 1, **caractérisé en ce que** les points d'assemblage (30-1, 30-2) sont agencés de part et d'autre de la section de pliage (22).

3. Élément d'habillage selon la revendication 2, **caractérisé en ce que** les points d'assemblage (30-1) sont agencés sur un côté de la section de pliage (22) qui est décalé par rapport aux points d'assemblage (30-2) situés sur l'autre côté de la section de pliage (22).

4. Élément d'habillage selon l'une quelconque des revendications précédentes, **caractérisé en ce que** les points d'assemblage (30-1, 30-2) sont agencés à une distance (AB) de la section de pliage (22).

5. Élément d'habillage selon la revendication 4, **caractérisé en ce que** la distance (AB) entre un point d'assemblage (30-1, 30-2) et la section de pliage (22) est supérieure ou égale à une largeur (FB), mesurée de manière essentiellement orthogonale par rapport à la direction longitudinale (LB) de la section de pliage (22), des points d'assemblage (30-1, 30-2).

6. Élément d'habillage selon l'une quelconque des revendications précédentes, **caractérisé en ce que** les points d'assemblage (30-1, 30-2) sont des points de soudure par ultrasons ou des points de collage.

7. Élément d'habillage selon l'une quelconque des revendications précédentes, **caractérisé en ce que** la section de bord (26) rabattue est agencée dans la zone (32, 34) du côté intérieur (12) au-dessus de la section de pliage (22) derrière laquelle le sac gonflable est agencé à l'état monté.

8. Élément d'habillage selon l'une quelconque des revendications précédentes, **caractérisé en ce qu'**une section de bord (36) supérieure ou inférieure rabattue de l'élément textile (24) est agencée sur une section de bord (26) latérale rabattue.

9. Véhicule automobile, comprenant une carrosserie, dans lequel une zone supérieure de la carrosserie comprend plusieurs montants, en particulier deux montants A avant; au moins un élément d'habillage (10) selon l'une quelconque des revendications précédentes, dans lequel l'élément d'habillage (10) est mis en place au niveau d'un des montants ; et
un sac gonflable, qui est logé derrière l'élément d'habillage (10) par rapport à l'habitacle de véhicule.
